# EUROPÄISCHE PATENTSCHRIFT

(11) **EP 1 634 484 B1**
(45) Veröffentlichungstag und Bekanntmachung des Hinweises auf die Patenterteilung: **22.11.2006**
(21) Anmeldenummer: 04739155.2
(22) Anmeldetag: 08.05.2004
(51) Int. Cl.: H05B 41/24

(54) **ANSTEUERUNG FÜR EINEN EXCIMER-STRAHLER**
CONTROL FOR AN EXCIMER EMITTER
COMMANDE POUR EMETTEUR A EXCIMERES

(30) Priorität: 05.06.2003 DE 10325771
(43) Veröffentlichungstag der Anmeldung: 15.03.2006
(73) Patentinhaber: MAN Roland Druckmaschinen AG, 63075 Offenbach (DE)
(72) Erfinder: IHME, Andreas, 63773 Goldbach (DE); MEHNERT, Reiner, 04416 Markkleeberg (DE); REISING, Michael, 63073 Offenbach (DE)
(74) Vertreter: Stahl, Dietmar
(86) Internationale Anmeldenummer: PCT/EP2004/004934
(87) Internationale Veröffentlichungsnummer: WO 2004/108415

(56) Entgegenhaltungen:
- EP-A- 1 164 820
- WO-A-02/30828
- GB-A- 768 535
- PATENT ABSTRACTS OF JAPAN Bd. 1999, Nr. 09, 30. Juli 1999 (1999-07-30) -& JP 11 097194 A (MATSUSHITA ELECTRIC IND CO LTD), 9. April 1999 (1999-04-09)

## Beschreibung

Die Erfindung betrifft eine Ansteuerung für einen Excimer-Strahler gemäß dem Oberbegriff von Anspruch 1.

### [Stand der Technik]

UV-Trockner finden sowohl in Bogen- als Rollendruckmaschinen Verwendung. Herkömmliche UV-Trockner sind als QuecksilberDampflampen ausgebildet. Nachteilig bei derartigen UV-Trocknern ist, dass bei diesen breitbandig strahlenden Lampen relativ viel Ozon entsteht, welches abgesaugt und nach außen geleitet werden muss. Besondere UV-Lampen für Trockner stellen hierbei die Excimer-Strahler dar, welche eine monochromatische UV-Strahlung aussenden. In der Praxis werden hier häufig Strahler verwendet, welche eine Wellenlänge von 308nm emittieren. Ein Vorteil eines derartigen Strahlers ist, dass keine Erwärmung des Papieres erfolgt, da die Strahlung keine IR-Anteile enthält. Bei einer Wellenlänge von 308mn erfolgt ferner auch keine Ozonbildung. Auch ergibt sich eine bessere Nutzung der elektrischen Aufnahmeleistung für den Trocknungsvorgang.

Ein Excimer-Strahler besteht dabei im wesentlichen aus einem koaxial aufgebauten Kondensator, zwischen dessen Elektroden sich ein durch elektrische Entladung zündbares Gasgemisch befindet. Ein derartiges Gasgemisch ist beispielsweise Xenon, eine Chlorverbindung und Argon als Trägergas. Während der Gasentladung entstehen hierbei kurzlebig angeregte Moleküle XeCl*. Diese angeregten Moleküle emittieren eine Wellenlänge von 308nm.

Die koaxialen Wandungen des Gasraumes werden durch Quarzröhren gebildet, auf denen die innere bzw. die äußere Elektroden aufgebracht sind. Hierbei kann vorgesehen sein, dass die innere als auch eine weitere äußere Röhre jeweils mit Kühlwasser durchströmt sind.

Zur Anregung der kurzlebigen Moleküle ist eine Barriereentladung im Gasraum und im Dielektrikum Quarz erforderlich. Dies erfolgt mittels HF-Spannungen mit Amplituden von 2 bis 10kV und Frequenzen von 100 bis 100OkHz. Wenn die Hochspannung, welche an den Entladungsschrauben anliegt, die Durchbruchsspannung des Gases überschreitet, fließt ein Entladestrom, der Excimer-Moleküle erzeugt und Lichtemission verursacht. Der Stromfluss wird jedoch nach sehr kurzer Zeit (Nanosekunden) unterbrochen, weil das Dielektrikum Quarz aufgeladen wird. Das führt zu einer momentanen Verringerung der elektrischen Feldstärke im Entladungsspalt und unterbricht den Stromfluss. Zur Erzeugung der erforderlichen HF-Spannungen werden bei bekannten Excimer-Strahlern HF-Generatoren verwendet, welche Endstufen mit Ferrit-Transformatoren aufweisen. Gerade die Übertragungscharakteristik des Ferrit-Materials begrenzt sowohl die Frequenz als die HF-Leistung derartiger Generatoren. Um Excimer-Strahler in schnelllaufenden Bogenoffset-Maschinen zu verwenden, sind Beleuchtungsstärken in der Ebene des Bedruckstoffes von mehr als 300 mW/cm² erforderlich. Derartig Leistungsstarke Excimer-Strahler im Bereich Wellenlänge 308 nm stehen aber mit Ferrit-Transformatoren nicht zur Verfügung. Aus der DE 42 38 388 C2 ist eine elektronische Schaltungsanordnung zur Ansteuerung eines Excimer-Strahlers mittels einem Hochspannungsübertragers bekannt.

### [Aufgabe der Erfindung]

Aufgabe der vorliegenden Erfindung ist es eine Ansteuerung für einen Excimer-Strahler gemäß dem Oberbegriff von Anspruch 1 derartig zu erweitern, so dass eine höhere UV-Bestrahlungsstärke erzielt werden kann.

Gelöst wird diese Aufgabe durch die kennzeichnenden Merkmale von Anspruch 1. Weiterbildungen der Erfindung ergeben sich aus den Unteransprüchen.

### [Beispiele]

Erfindungsgemäß ist vorgesehen, dass die Ansteuerung des Excimer-Strahlers mittels eines speziell angepassten HF-Generators erfolgt, welcher als selbsterregter Einkreisgenerator mit Wasser gekühlter Senderöhre ausgelegt ist und der einen internen bzw. externen Arbeitskreis hält, über welchen die Excimer-Strahlerröhre mit dem Generator verbunden ist. Die Leistung wird hierbei über wassergekühlte Kondensatoren und Schwingkreisinduktivitäten in den Excimer-Strahler eingekoppelt.

Gemäß einer bevorzugten Ausführungsform der Erfindung ist der den HF-Generator mit dem Excimer-Strahler verbindende Arbeitskreis extern angeordnet und elektrisch abgeschirmt ausgeführt. Dieser extern angeordnete und elektrisch abgeschirmter Arbeitskreis wird dann über ein HF-Kabel mit dem HF-Generator verbunden. Der Arbeitskreis selbst ist dabei in der Nähe der Excimer-Strahler angeordnet. Hierbei ergibt sich die Möglichkeit, mehrere Excimer-Strahler mit dem Arbeitskreis zu verbinden.

Eine weitere Ausgestaltung der Erfindung besteht darin, ebenfalls die Senderöhre in die den Arbeitskreis aufzunehmende Einheit zu integrieren. So ist es ebenfalls möglich, mehrere in einem Druckwerk oder einer sonstigen Einrichtung der Druckmaschine angeordnete Excimer-Strahler von einem Arbeitskreis aus zu versorgen.

Eine vorteilhafte Ausgestaltung der Erfindung sieht vor, dass die Induktivität im Arbeitskreis, über welchen der HF-Generator mit dem Excimer-Strahler verbunden ist, einstellbar bzw. veränderlich ausgeführt ist, so dass die Entladungscharakteristik des Excimer-Strahlers für den gesamten Leistungsbereich exakt anpassbar ist und damit eine optimale Einkopplung der HF-Leistung in die Barriereentladung des Strahlers erzielt werden kann. Hierbei kann vorgesehen sein, eine verstellbare Induktivität zu verwenden. Alternativ ist es ebenfalls möglich, eine Induktivität mit mehreren Abgriffsmöglichkeiten zu verwenden. Verwendet wird dann diejenige Induktivität, welche die beste Entladungscharakteristik ergibt.

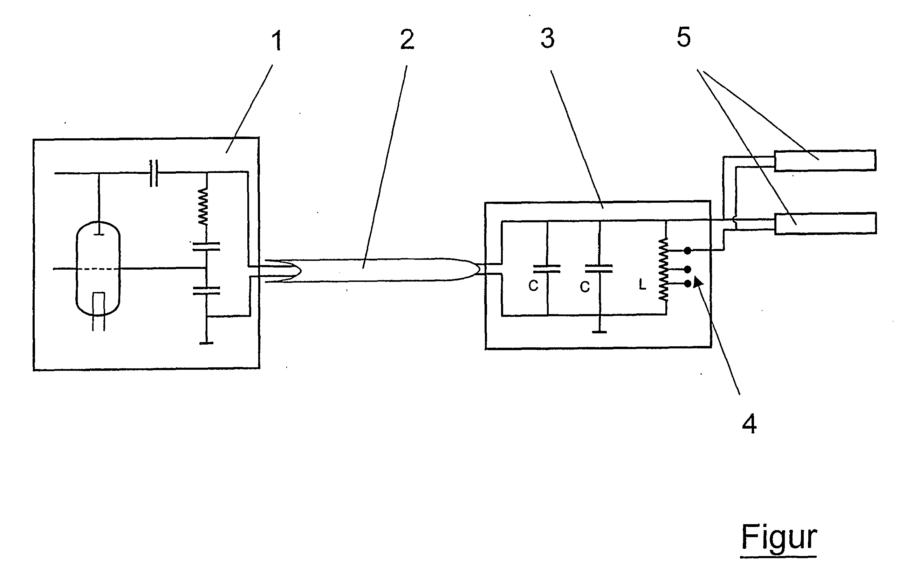

Des weiteren erfolgt die Erläuterung eines Ausführungsbeispiels der Erfindung anhand der Zeichnung. Diese zeigt den erfindungsgemäßen Generator mit Arbeitskreis sowie daran angeschlossene Excimer-Strahler.

Ein HF-Generator 1 ist wie dargestellt als Röhrengenerator mit einer Rückkoppelung ausgebildet. Der Ausgang dieses HF-Generators 1 ist über ein HF-Kabel 2 mit dem Eingang eines Arbeitskreises 3 verbunden. Dieser Arbeitskreis 3 weist zwei Kapazitäten C und ausgangsseitig eine Induktivität L mit mehreren Abgriffen 4 auf. Über ein Kontakt der Abgriffe 4 sind zwei Excimer-Strahler 5 angeschlossen, wobei jeweils der Abgriff 4 gewählt ist, der den gewünschten Induktivitätswert des Arbeitskreises 3 liefert. Die Excimer-Strahler 5 sind als Strahlungsröhren ausgebildet, deren Aufbau bekannt ist.

Die Excimer-Strahler 5 sind in einer nicht dargestellten Druckmaschine angeordnet und dienen der Trocknung des Bedruckstoffes. Der Arbeitskreis 3 ist den Excimer-Strahlern 5 zugeordnet, d.h. befindet sich in deren Nähe. Über das HF-Kabel 2 kann eine Entfernung von einigen Metern zwischen HF-Generator 1 und Arbeitskreis 3 überbrückt werden. Somit ist es möglich, den HF-Generator neben der Druckmaschine aufzustellen.

Weiterhin ist vorgesehen, dass die Kapazitätswerte der Kapazitäten C im Arbeitskreis 3 größer sind als die Kapazitäten des HF-Kabels L und des am Arbeitskreis 3 angeschlossenen Excimer-Strahlers 5. So lassen sich große Längen des Kabels 2 realisieren.

### [Bezugszeichenliste]

- 1: HF-Generator
- 2: HF-Kabel
- 3: Arbeitskreis
- 4: Abgriff
- 5: Excimer-Strahler

- C: Kapazität
- L: Induktivität

## Patentansprüche

1. Ansteuerung für einen Excimer-Strahler, insbesondere für den Trockner in einer Druckmaschine, bestehend aus einem HF-Generator, welcher ausgangsseitig mit einem Excimer-Strahler verbunden ist,
**dadurch gekennzeichnet,**
**dass** der HF-Generator (1) als ein Röhren-Generator mit einer Rückkoppelung ausgebildet ist, dass der Ausgang des HF-Generators (1) mit dem Eingang eines eine Kapazität (C) und eine Induktivität (L) aufweisenden Arbeitskreis (3) verbunden ist, und dass der Excimer-Strahler (5) am Ausgang des Arbeitskreises (3) angeschlossen ist.

2. Ansteuerung nach Anspruch 1,
**dadurch gekennzeichnet,**
**dass** der Arbeitskreis (3) über ein HF-Kabel (2) mit dem Ausgang des HF-Generators (1) verbunden ist.

3. Ansteuerung nach Anspruch 1,
**dadurch gekennzeichnet,**
**dass** am Ausgang des Arbeitskreises (3) mehrere Excimer-Strahler (5) angeschlossen sind.

4. Ansteuerung nach einem der vorhergehenden Ansprüche,
**dadurch gekennzeichnet,**
**dass** der Arbeitskreis (3) eine verstellbare Induktivität (L) aufweist.

5. Ansteuerung nach einem der Ansprüche 1 bis 3,
**dadurch gekennzeichnet,**
**dass** die Induktivität (L) des Arbeitskreises (3) mehrere Abgriffe (4) mit unterschiedlichen Induktivitäten zum Anschluss eines Excimer-Strahlers (5) aufweist.

6. Ansteuerung nach einem der vorhergehenden Ansprüche,
**dadurch gekennzeichnet,**
**dass** der Arbeitskreis (3) dem Excimer-Strahler (5) räumlich zugeordnet ist.

7. Ansteuerung nach einem der vorhergehenden Ansprüche,
**dadurch gekennzeichnet,**
**dass** die Kapazitätswerte der Kapazitäten (C) im Arbeitskreis (3) größer sind als die Kapazitäten des HF-Kabels (L) und des am Arbeitskreis (3) angeschlossenen Excimer-Strahlers (5).

## Claims

1. Control for an excimer emitter, in particular for the dryer in a printing press, comprising an HF generator, which is connected on the output side to an excimer emitter, **characterized in that** the HF generator (1) is formed as a tube generator with a feedback, **in that** the output of the HF generator (1) is connected to the input of a working circuit (3) having a capacitor (C) and an inductor (L), and **in that** the excimer emitter (5) is connected to the output of the working circuit (3).

2. Control according to Claim 1, **characterized in that** the working circuit (3) is connected to the output of the HF generator (1) by means of an HF cable (2).

3. Control according to Claim 1, **characterized in that** a number of excimer emitters (5) are connected to the output of the working circuit (3).

4. Control according to one of the preceding claims, **characterized in that** the working circuit (3) has an adjustable inductor (L).

5. Control according to one of Claims 1 to 3, **characterized in that** the inductor (L) of the working circuit (3) has a number of taps (4) with different inductances for the connection of an excimer emitter (5).

6. Control according to one of the preceding claims, **characterized in that** the working circuit (3) is spatially assigned to an excimer emitter (5).

7. Control according to one of the preceding claims, **characterized in that** the capacitance values of the capacitors (C) in the working circuit (3) are greater than the capacitances of the HF cable (L) and of the excimer emitter (5) connected to the working circuit (3).

## Revendications

1. Système d'amorçage pour un émetteur de rayonnement Excimer, notamment pour le séchoir dans une machine à imprimer, constitué d'un générateur HF, qui côté sortie est relié à un émetteur de rayonnement Excimer,
**caractérisé en ce que** le générateur HF (1) est conçu sous la forme d'un générateur à tubes électroniques avec une réinjection, **en ce que** la sortie du générateur HF (1) est reliée à l'entrée d'un circuit de travail (3) comportant une capacité (C) et une inductance (L) et **en ce que** l'émetteur de rayonnement Excimer (5) est connecté sur la sortie du circuit de travail (3).

2. Système d'amorçage selon la revendication 1,
**caractérisé en ce que** le circuit de travail (3) est relié par l'intermédiaire d'un câble HF (2) avec la sortie du générateur HF (1).

3. Système d'amorçage selon la revendication 1,
**caractérisé en ce que** plusieurs émetteurs de rayonnement (5) sont connectés sur la sortie du circuit de travail (3).

4. Système d'amorçage selon l'une quelconque des revendications précédentes,
**caractérisé en ce que** le circuit de travail (3) présente une inductance réglable (L).

5. Système d'amorçage selon l'une quelconque des revendications 1 à 3,
**caractérisé en ce que** l'inductance (L) du circuit de travail (3) comporte plusieurs prises (4) de différentes inductances pour la connexion d'un émetteur de rayonnement Excimer (5).

6. Système d'amorçage selon l'une quelconque des revendications précédentes,
**caractérisé en ce que** le circuit de travail (3) est associé dans l'espace à l'émetteur de rayonnement Excimer (5).

7. Système d'amorçage selon l'une quelconque des revendications précédentes,
**caractérisé en ce que** les valeurs capacitives des capacités (C) dans le circuit de travail (3) sont supérieures aux capacités du câble HF (L) et de l'émetteur de rayonnement Excimer (5) connecté sur le circuit de travail (3).
